# EUROPÄISCHE PATENTSCHRIFT

(11) **EP 2 446 127 B1**
(45) Veröffentlichungstag und Bekanntmachung des Hinweises auf die Patenterteilung: **27.12.2017**
(21) Anmeldenummer: 10715823.0
(22) Anmeldetag: 26.04.2010
(51) Int. Cl.: F01N 3/36

(54) **DICHTEINHEIT**
SEALING ELEMENT
ELÉMENT D'ÉTANCHÉITE

(30) Priorität: 25.06.2009 DE 102009027181
(43) Veröffentlichungstag der Anmeldung: 02.05.2012
(73) Patentinhaber: Robert Bosch GmbH, 70442 Stuttgart (DE)
(72) Erfinder: STEIN, Stefan, 70195 Stuttgart (DE); BENITSCH, Jens, 89077 Ulm (DE)
(86) Internationale Anmeldenummer: PCT/EP2010/055493
(87) Internationale Veröffentlichungsnummer: WO 2010/149411

(56) Entgegenhaltungen:
- WO-A1-2005/005799
- WO-A1-2008/080695
- DE-A1-102005 061 145
- DE-C1- 19 839 125

## Beschreibung

### Stand der Technik

Die Erfindung betrifft eine Dichteinheit zur Montage einer Einspritzeinheit an einem Abgastrakt.

Es ist bekannt, in einem Abgassystem eines Verbrennungsmotors einen Partikelfilter zu installieren. Handelt es sich bei dem Verbrennungsmotor um einen Dieselmotor, so wirkt der Partikelfilter beispielsweise als Rußfilter und senkt aufgrund seiner Filterwirkung den Feinstaubausstoß. Um zu verhindern, dass sich der Filter nach einer bestimmten Einsatzdauer zusetzt, ist es erforderlich, den Filter von Zeit zu Zeit zu regenerieren. Die Regeneration erfolgt durch Temperaturerhöhung beispielsweise auf rund 600 Grad Celsius, wodurch die Partikel, insbesondere Rußpartikel, verbrennen. Da dies nicht in allen Betriebszuständen durch motorische Maßnahmen möglich ist, wird die Temperaturerhöhung durch Kraftstoff, zum Beispiel Diesel, erzielt, der über ein Einspritzventil in den Abgasstrang eingespritzt wird. Der eingespritzte Kraftstoff gelangt zu einem Oxidationskatalysator, der in Strömungsrichtung vor dem Partikelfilter angeordnet ist. Der Kraftstoff wird im Oxidationskatalysator oxidiert bzw. verbrannt und führt so zu einer Abgastemperaturerhöhung. Entsprechend heiße Abgase gelangen zum nachgeschalteten Partikelfilter und bewirken dort die Regeneration durch Verbrennen der im Filter abgelagerten Partikel.

Zur selektiven katalytischen Reduktion von Stickoxiden in Abgasen in einem SCR-Katalysator wird eine Harnstofflösung in den Abgasstrang eingespritzt.

Es besteht daher ein Bedürfnis für eine Vorrichtung, die es ermöglicht, eine Flüssigkeit in einen Abgasstrang einzuspritzen.

Ein Einspritzventil zum Einspritzen des flüssigen Kraftstoffs ist an einem an dem Abgasstrang ausgebildeten Flansch befestigt. Um Gasdichtheit zwischen dem Einspritzventil und dem Befestigungsflansch zu gewährleisten, ist zwischen den beiden Komponenten eine Dichteinheit eingespannt. Die Dichteinheit hat einen Abschirmtopf, der einen Luftspalt zwischen dem Einspritzventil und dem Flansch schafft. Der Luftspalt isoliert das Einspritzventil thermisch von dem Flansch und dem im Abgasstrang strömenden Abgas.

Auf beiden Seiten des Abschirmtopfs, d.h. auf der dem Flansch zugewandten Seite und auf der dem Einspritzventil zugewandten Seite ist ein Dichtblech angebracht. In dem Dichtblech ist eine Sicke ausgebildet. Die Sicke wird beim Verschrauben der Montageeinheit, die das Einspritzventil hält, mit dem Flansch plastisch verformt und stellt so die notwendige Gasdichtheit zwischen dem Flansch des Abgasstrangs und der Montageinheit her.

Bei den bisher bekannten Dichteinheiten werden der Abschirmtopf und die beiden Dichtbleche einzeln gefertigt und anschließend, z.B. durch Schweißen, miteinander verbunden.

WO 2005/005799 A1 offenbart eine Vorrichtung zum Dosierung von Reduktionsmittel zum Abgas eines Verbrennungsmotors mit einem Injektor, dem über einen Zulauf Reduktionsmittel aus einem Vorratstank zugeführt wird, wobei der Injektor einen Dichtsitz und einen beweglichen Kolben aufweist, der beim Abheben vom Dichtsitz einen Durchfluss von Reduktionsmittel zum Abgas freigibt und der Kolben durch Druck des Reduktionsmittels von seinem Dichtsitz abgehoben wird.

DE 198 39 125 C1 beschreibt eine Dosiervorrichtung für Fluid, die eine mit einem Fluiddruck beaufschlagbare sekundärseitige Bohrung eines Gehäuses aufweist, die einerseits an einer Mündung nach außen und andererseits in eine Hydraulikkammer führt. Die Dosiervorrichtung hat ein Hubelement, das ein Dichtelement aufweist und in der sekundärseitigen Bohrung axialverschiebbar führbar ist, durch das die Mündung von außen verschliessbar ist. Die Dosiervorrichtung hat auch einen Primärantrieb, dessen Hub über die Hydraulikkammer hydraulisch an das Hubelement übertragbar ist, wobei das Hubelement durch die Hubbewegung des Primärantriebs so verschiebbar ist, dass ein Öffnen und Schließen der Mündung mittels des Dichtelementes steuerbar ist und das Fluid bei geöffneter Mündung über die sekundärseitige Bohrung nach außen abgebbar ist. Die Hydraulikkammer ist von der sekundärseitigen Bohrung aus durch eine Passung von Hubelement und Gehäuse mit dem Fluid gedrosselt druckbeaufschlagbar.

### Offenbarung der Erfindung

Eine Aufgabe der Erfindung ist es, eine Dichteinheit bereit zu stellen, die bei gleicher Funktion einfacher und kostengünstiger herstellbar ist.

Die Aufgabe wird von einer erfindungsgemäßen Dichteinheit gemäß dem unabhängigen Patentanspruch 1 gelöst. Die abhängigen Patentansprüche beschreiben vorteilhafte Ausgestaltungen der erfindungsgemäßen Dichteinheit nach dem unabhängigen Patentanspruch 1.

Eine erfindungsgemäße Dichteinheit zur Montage zwischen einer Einspritzeinheit und einem Montageflansch eines Abgasstrangs derart, dass ein flacher Befestigungsbereich der Dichteinheit zwischen der Einspritzeinheit und dem Montageflansch abgeordnet ist, ist aus einem einzigen Stück Metallblech geformt. Die Dichteinheit hat einen becherförmig geformten Bereich, der den Abschirmtopf bildet, und einen flachen Befestigungsbereich, der außerhalb des becherförmigen Bereichs ausgebildet ist. In dem flachen Befestigungsbereich ist wenigstens eine plastisch verformbare Sicke ausgebildet. In dem becherförmigen Bereich ist wenigstens eine Öffnung zum Einspritzen einer Flüssigkeit in den Abgasstrang ausgebildet. Durch die in dem becherförmigen Bereich ausgebildete Einspritzöffnung kann eine Flüssigkeit, z.B. Kraftstoff oder Harnstoff, aus der Einspritzdüse, die z.B. mit einem nach außen öffnenden Tellerventil ausgebildet ist, in den Abgasstrang eingespritzt werden.

Dadurch, dass eine erfindungsgemäße Dichteinheit aus einem einzigen Stück Metall geformt ist, wird die Herstellung erheblich vereinfacht, da die bisher notwendigen Arbeitsschritte des Befestigens der beiden im Stand der Technik vorgesehenen Dichtbleche an dem Abschirmtopf entfallen. Der becherförmig ausgebildete Bereich bildet einen Abschirmtopf, der die thermische Isolation des Einspritzventils vom Abgasstrang sicherstellt. Bei der Montage wird die Montageeinheit gegen den Flansch gedrückt, wodurch die im flachen Bereich ausgebildete Sicke plastisch verformt wird und die Gasdichtheit der Verbindung sicherstellt.

In einer Ausführungsform ist die Dichteinheit aus einem Metallblech geformt, das eine Dicke von 0,1 bis 1,0 mm hat. Vorzugsweise hat das Metallblech eine Dicke von 0,6 mm. Aus einem Metallblech dieser Dicke ist eine Dichteinheit besonders einfach, z. B. durch Tiefziehen herstellbar. Gleichzeitig stellt eine Dichteinheit aus einem Metallblech mit dieser Dicke die notwendige Gasdichtheit zwischen der Montageeinheit und dem Abgasstrang sicher. Bei Blechen dieser Dicke sind die zum Verformen der Sicke notwendigen Kräfte gut realisierbar, bei dickeren Blechen lässt sich die Sicke nicht mehr geeignet verformen.

In einer Ausführungsform enthält das Metallblech hochtemperaturbeständigen Edelstahl. Eine Dichteinheit, die hochtemperaturbeständigen Edelstahl enthält, hat sich als besonders zuverlässig und haltbar erwiesen.

In einer Ausführungsform ist der becherförmige Bereich der Dichteinheit durch Tiefziehen des Metallblechs ausgebildet. Durch Tiefziehen des Metallblechs kann der becherförmige Bereich der Dichteinheit besonders einfach und kostengünstig mit der gewünschten Toleranz der Abmessungen ausgebildet werden.

In einer Ausführungsform ist der becherförmige Bereich der Dichteinheit so ausgebildet ist, dass zwischen einem Bereich der Dichteinheit und dem Abgasstrang ein Luftspalt ausgebildet ist. Durch einen solchen Luftspalt wird die Dichteinheit besonders effektiv thermisch von dem Abgasstrang isoliert.

In einer Ausführungsform ist in dem flachen Bereich der Dichteinheit wenigstens eine Öffnung zur Aufnahme eines Befestigungselements ausgebildet. Durch die Aufnahme eines Befestigungselements in einer solchen Öffnung kann die Dichteinheit besonders einfach und sicher zwischen der Einspritzeinheit und dem Abgasstrang befestigt werden.

In einer weiteren Ausführungsform ist wenigstens eine Fläche der Dichteinheit wenigstens teilweise mit einer Dichtmasse beschichtet. Durch die Beschichtung mit einer Dichtmasse kann die Dichtheit zwischen der Einspritzeinheit und dem Abgasstrang verbessert und insbesondere in den ersten Betriebsstunden nach der Montage, wenn noch keine Verkokung eingetreten ist, sicher gewährleistet werden.

In einer Ausführungsform ist wenigstens eine Fläche der Dichteinheit mit einem graphithaltigen Lack, wie z.B. Metaloseal®, beschichtet. Ein graphithaltiger Lack hat sich als eine vorteilhafte hochtemperaturbeständige Beschichtung erwiesen, die eine gute Dichtheit gewährleistet.

In einer Ausführungsform hat die Beschichtung auf jeder Seite der Dichteinheit eine Dicke von 0,005 bis 0,015 mm. Vorzugsweise hat die Beschichtung auf jeder Seite eine Dicke von 0,01 mm. Eine Beschichtung dieser Dicke hat sich als besonders vorteilhaft erwiesen, um die notwendige Dichtheit kostengünstig zu gewährleisten.

Die Erfindung wird im Folgenden anhand der beiliegenden Figuren näher erläutert. Dabei zeigt:
Figur 1 eine schematische perspektivische Ansicht einer erfindungsgemäßen Dichteinheit;
Figur 2 einen Schnitt durch eine erfindungsgemäße Dichteinheit;
Figur 3 eine zwischen einer Einspritzeinheit und einem Abgasstrang montierten erfindungsgemäßen Dichteinheit.

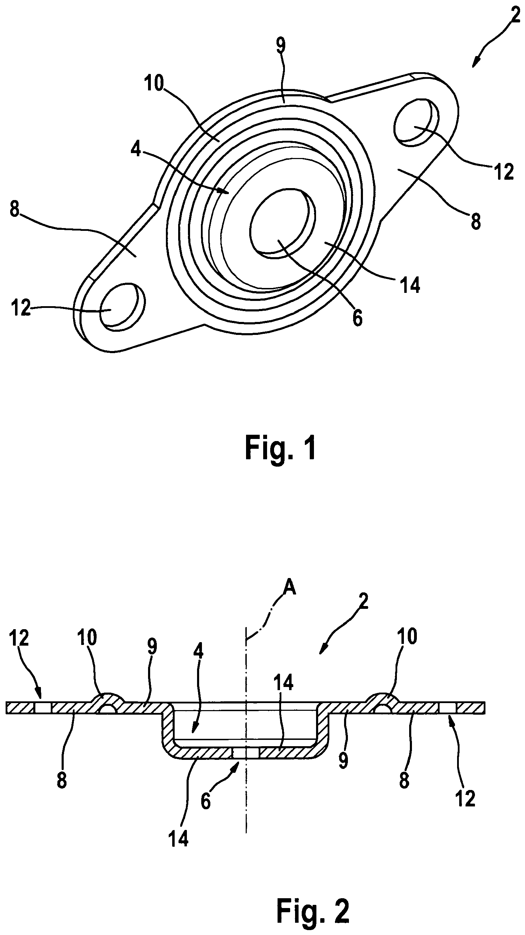

Figur 1 zeigt eine schematische Darstellung einer perspektivischen Ansicht einer erfindungsgemäßen Dichteinheit 2.

Die Dichteinheit 2 weist in ihrem mittleren Bereich einen becherförmigen Bereich 4 mit einem kreisförmigen Boden 14 und einer umlaufenden Wand auf. Im montieren Zustand der Dichteinheit 2 bildet der becherförmige Bereich 4 einen thermisch isolierenden Abschirmtopf, der ein Einspritzventil thermisch von einem heißen Abgasstrang isoliert. Im Boden 14 des becherförmigen Bereichs 4 ist eine zentrale Öffnung 6 ausgebildet, die in dem in der Figur 1 gezeigten Ausführungsbeispiel kreisförmig ist. Durch die Öffnung 6 ist im montierten Zustand der Dichteinheit 2 eine Flüssigkeit aus dem Einspritzventil in einen darunter liegenden Abgasstrang einspritzbar.

Am oberen, vom Boden 14 beabstandeten Rand des becherförmigen Bereichs 4 ist ein flacher Bereich 9 ausgebildet, der den becherförmigen Bereich 4 kragenartig umgibt und sich in Form von zwei einander gegenüberliegenden Befestigungslaschen 8 von dem becherförmigen Bereich 4 radial nach außen erstreckt.

In jeder der beiden Befestigungslaschen 8 ist jeweils eine kreisförmige Befestigungsöffnung 12 ausgebildet. Die Befestigungsöffnung 12 sind zur Aufnahme jeweils eines in der Figur 1 nicht gezeigten Befestigungselements vorgesehen, um die Dichteinheit 2 an einem Abgasstrang zu befestigen.

In dem flachen Bereich 9 ist zwischen den Befestigungsöffnungen 12 und dem becherförmigen Bereich 4 eine Sicke 10 ausgebildet, die den becherförmigen Bereich 4 kreisförmig umschließt.

Die kreisförmige Form des becherförmigen Bereichs, der Öffnung 6, der Befestigungsöffnungen 12 und der Sicke 10 in dem in der Figur 1 gezeigten Ausführungsbeispiel sind nur beispielhaft. Je nach Bedarf sind auch andere Formen, wie z. B. elliptische oder mehreckige Formen möglich. Auch kann die Dichteinheit 2 mit mehr als zwei Befestigungslaschen 8 und/oder Befestigungsöffnungen 12 ausgebildet sein.

Figur 2 zeigt schematisch einen Schnitt durch ein Ausführungsbeispiel einer erfindungsgemäßen Dichteinheit 2.

Im mittleren Bereich der Figur 2 ist der becherförmige Bereich 4 der Dichteinheit 2 zu erkennen, der rotationssymmetrisch um eine Achse A ausgebildet ist. Der becherförmige Bereich 4 hat einen kreisförmigen Boden 14, in dessen Mitte eine Öffnung 6 ausgebildet ist. Wenn die Dichteinheit 2 zwischen einem Abgasstrang und einer Einspritzeinheit montiert ist, ist eine Flüssigkeit aus einer in der Einspritzeinheit vorgesehenen Einspritzdüse durch die Öffnung 6 in einen darunter liegenden Abgasstrang einspritzbar.

An den oberen Rand des becherförmigen Bereichs 4 schließt der flache Bereich 9 mit den Befestigungslaschen 8 an. In dem flachen Bereich 9 ist eine Sicke 10 ausgebildet, die den becherförmigen Bereich 4 kreisförmig umschließt.

In dem in der Figur 2 gezeigten Ausführungsbeispiel steht die Sicke 10 auf der dem becherförmigen Bereich 4 gegenüberliegenden Oberseite der Dichteinheit 2 hervor, so dass die Sicke 10 im montierten Zustand der Einspritzeinheit zugewandt ist. Die Sicke 10 kann jedoch auch "nach unten", d. h., zu der gleichen Seite wie der becherförmige Bereich 4 ausgebildet sein, so dass die Sicke 10 im montierten Zustand dem Abgasstrang zugewandt ist.

Radial außerhalb der Metallsicke 10 sind im flachen Bereich 9 zwei Befestigungsöffnungen 12 zur Aufnahme jeweils eines nicht gezeigten Befestigungselements ausgebildet.

Wie aus der Figur 1 ersichtlich, ist der äußere Bereich des flachen Bereichs 9 mit den Befestigungslaschen 8 nicht rotationssymmetrisch um die Achse A.

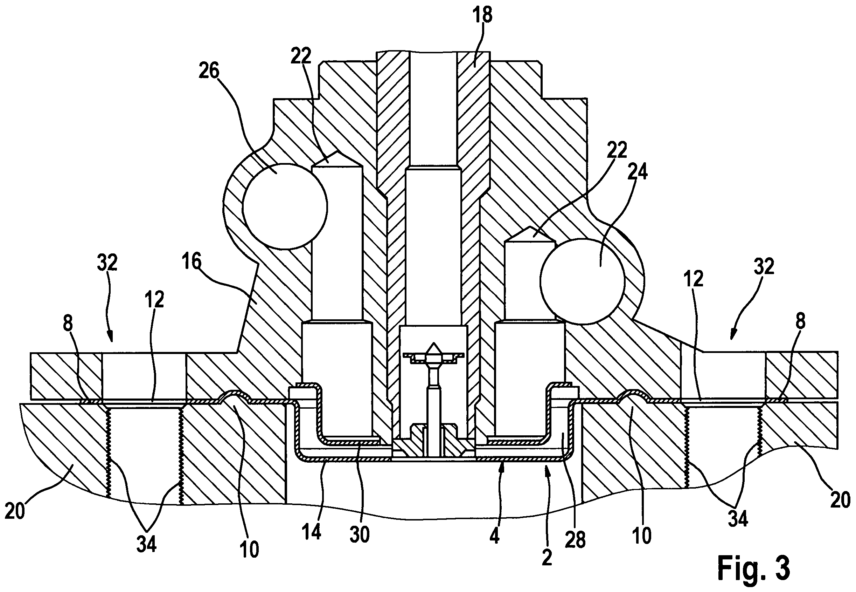

Figur 3 zeigt einen Schnitt durch eine Einspritzeinheit 16 und einen Montageflansch 20 eines Abgasstrangs sowie durch eine zwischen der Einspritzeinheit 16 und dem Montageflansch 20 angeordnete erfindungsgemäße Dichteinheit 2.

Der in der Figur 3 nicht gezeigte Abgasstrang verläuft unterhalb des Montageflansches 20 von links nach rechts. In der Einspritzeinheit 16 ist rechtwinklig zu dem Abgasstrang ein Einspritzventil 18 angeordnet. Durch das Einspritzventil 18 ist Flüssigkeit aus einer in der Figur 3 nicht gezeigten Zufuhr in den nicht gezeigten Abgasstrang einspritzbar.

In der Einspritzeinheit 16 ist ein Kühlkanal 22 ausgebildet, der das Einspritzventil 18 umgibt. Über eine Kühlmittelzufuhr 24 ist dem Kühlkanal 22 Kühlmittel zuführbar. Das Kühlmittel umströmt das Einspritzventil 18 und nimmt dabei Wärme auf, die im Betrieb von dem Abgasstrang auf die Einspritzeinheit 16 übertragen wird. Aus dem Kühlkanal 22 strömt das Kühlmittel durch einen Ablauf 26 zu einer externen Kühlvorrichtung, wo es die aufgenommene Wärme abgibt, bevor es erneut durch die Kühlmittelzufuhr 24 dem Kühlkanal 22 zugeführt wird.

Durch einen Kühlkreislauf wird die Temperatur des Einspritzventils 18 auf einem gegenüber dem Abgasstrang reduzierten Niveau gehalten und eine übermäßige Erhitzung der einzuspritzenden Flüssigkeit im Einspritzventil 18, die zu einer vorzeitigen Alterung der Flüssigkeit führen kann, vermieden.

Der Kühlkanal 22 wird auf seiner dem Abgasstrang zugewandten Seite durch ein Kühlblech 30 begrenzt und verschlossen, so dass kein Kühlmittel aus dem Kühlkanal 22 in den Abgasstrang austritt.

Eine erfindungsgemäße Dichteinheit 2 ist zwischen dem Montageflansch 20 und der Einspritzeinheit 16 angebracht, wobei das Einspritzventil 18 in und über dem becherförmigen Bereich 4 der Dichteinheit 2 so angeordnet ist, dass zwischen dem Kühlblech 30 und dem Boden 14 des becherförmigen Bereichs 4 ein Luftspalt 28 ausgebildet ist. Der Luftspalt 28 isoliert das Einspritzventil 18 und den Kühlkanal 22 thermisch von dem Abgasstrang der im Betrieb von heißen Abgasen durchströmt wird, und verhindert so eine schädliche Erwärmung der Flüssigkeit im Einspritzventil 18.

Der flache Befestigungsbereich 8 der Dichteinheit 2 ist zwischen dem Montageflansch 20 und der Einspritzeinheit 16 angeordnet. Nicht gezeigte Befestigungselemente sind durch im Randbereich der Einspritzeinheit 16 ausgebildete Öffnungen 32 und die in dem Befestigungsbereich 8 der Dichteinheit 2 ausgebildeten Befestigungsöffnungen 12 einführbar, um die Dichteinheit 2 und die Einspritzeinheit 16 an dem Montageflansch 20 zu befestigen. Die Befestigungselemente können z. B. Gewindestifte oder Schrauben sein, die in entsprechende Gewinde 34 eingreifen, die im Montageflansch 20 ausgebildet sind.

Die Einspritzeinheit 16 wird durch die Befestigungselemente gegen den Montageflansch 20 gedrückt, sodass die im Befestigungsbereich 8 der Dichteinheit 2 ausgebildeten Sicken 10 plastisch verformt werden. Durch die plastisch verformten Sicken 10 wird die Dichtheit der Verbindung zwischen der Einspritzeinheit 16 und dem Montageflansch 20 hergestellt und der Abgasstrang wird gasdicht verschlossen. Da die Einspritzeinheit 16 nur im Bereich der Sicken 10 in direktem Kontakt mit der Dichteinheit 2 steht, ist die Wärmeübertragung zwischen der Dichteinheit 2 und der Einspritzeinheit 16 minimiert und eine übermäßige Erwärmung der Einspritzeinheit 16 und insbesondere der Flüssigkeit im Einspritzventil 18 wird vermieden.

## Patentansprüche

1. Dichteinheit (2) zur Montage zwischen einer Einspritzeinheit (14) und einem Montageflansch (20) eines Abgasstrangs **dadurch gekennzeichnet, dass** ein flacher Befestigungsbereich (9) der Dichteinheit (2) zwischen der Einspritzeinheit (14) und dem Montageflansch (20) angeordnet ist,
wobei die Dichteinheit (20) einen becherförmig ausgebildeten Bereich (4) aufweist und der flache Befestigungsbereich (9) außerhalb des becherförmigen Bereichs (4) ausgebildet ist,
wobei in dem flachen Befestigungsbereich (9) wenigstens eine plastisch verformbare Sicke (10) ausgebildet ist,
wobei die Dichteinheit (2) aus einem einzigen Stück Metallblech geformt ist, und
wobei in dem becherförmigen Bereich (4) wenigstens eine Öffnung (6) zum Einspritzen einer Flüssigkeit in den Abgasstrang ausgebildet ist.

2. Dichteinheit (2) nach Anspruch 1, wobei das Metallblech eine Dicke von 0,1 bis 1,0 mm hat.

3. Dichteinheit (2) nach Anspruch 2, wobei das Metallblech eine Dicke von 0,6 mm hat.

4. Dichteinheit (2) nach einem der vorangehenden Ansprüche, wobei das Metallblech hochtemperaturbeständigen Edelstahl enthält.

5. Dichteinheit (2) nach einem der vorangehenden Ansprüche, wobei der becherförmige Bereich (4) durch Tiefziehen des Metallblechs ausgebildet ist.

6. Dichteinheit (2) nach einem der vorangehenden Ansprüche, wobei der becherförmige Bereich (4) so ausgebildet ist, dass zwischen einem Bereich der Dichteinheit (2) und dem Abgasstrang ein Luftspalt ausgebildet ist.

7. Dichteinheit (2) nach einem der vorangehenden Ansprüche, wobei in dem flachen Befestigungsbereich (9) wenigstens eine Öffnung (12) zur Aufnahme eines Befestigungselementes ausgebildet ist.

8. Dichteinheit (2) nach einem der vorangehenden Ansprüche, wobei wenigstens eine Fläche der Dichteinheit (2) wenigstens teilweise mit einer Dichtmasse, insbesondere mit einem graphithaltigen Lack, beschichtet ist.

9. Dichteinheit (2) nach Anspruch 8, wobei die Beschichtung auf jeder Seite der Dichteinheit (2) zwischen 0,005 und 0,015 mm, vorzugsweise 0,01 mm dick ist.

## Claims

1. Sealing unit (2) for mounting between an injection unit (14) and a mounting flange (20) of an exhaust gas section, **characterized in that** a flat fastening region (9) of the sealing unit (2) is arranged between the injection unit (14) and the mounting flange (20), the sealing unit (20) having a cup-shaped region (4), and the flat fastening region (9) being configured outside the cup-shaped region (4), at least one plastically deformable bead (10) being configured in the flat fastening region (9), the sealing unit (2) being formed from a single piece of metal sheet, and at least one opening (6) for injecting a liquid into the exhaust gas section being configured in the cup-shaped region (4).

2. Sealing unit (2) according to Claim 1, the metal sheet having a thickness of from 0.1 to 1.0 mm.

3. Sealing unit (2) according to Claim 2, the metal sheet having a thickness of 0.6 mm.

4. Sealing unit (2) according to one of the preceding claims, the metal sheet comprising high-temperature resistant stainless steel.

5. Sealing unit (2) according to one of the preceding claims, the cup-shaped region (4) being configured by way of deep drawing of the metal sheet.

6. Sealing unit (2) according to one of the preceding claims, the cup-shaped region (4) being configured in such a way that an air gap is configured between a region of the sealing unit (2) and the exhaust gas section.

7. Sealing unit (2) according to one of the preceding claims, at least one opening (12) for receiving a fastening element being configured in the flat fastening region (9).

8. Sealing unit (2) according to one of the preceding claims, at least one face of the sealing unit (2) being coated at least partially with a sealing compound, in particular with a graphite-containing paint.

9. Sealing unit (2) according to Claim 8, the coating on every side of the sealing unit (2) having a thickness of between 0.005 and 0.015 mm, preferably of 0.01 mm.

## Revendications

1. Elément d'étanchéité (2) à monter entre une unité d'injection (14) et une bride de montage (20) d'un tuyau d'échappement, **caractérisé en ce qu'**une zone de fixation plate (9) de l'élément d'étanchéité (2) est disposée entre l'unité d'injection (14) et la bride de montage (20), dans lequel l'élément d'étanchéité (2) présente une zone réalisée en forme de gobelet (4) et la zone de fixation plate (9) est formée à l'extérieur de la zone en forme de gobelet (4), dans lequel au moins une moulure plastiquement déformable (10) est formée dans la zone de fixation plate (9), dans lequel l'élément d'étanchéité (2) est formé en une seule pièce de tôle métallique, et dans lequel au moins une ouverture (6) pour injecter un liquide dans le tuyau d'échappement est formée dans la zone en forme de gobelet (4).

2. Elément d'étanchéité (2) selon la revendication 1, dans lequel la tôle métallique a une épaisseur de 0,1 à 1,0 mm.

3. Elément d'étanchéité (2) selon la revendication 2, dans lequel la tôle métallique a une épaisseur de 0,6 mm.

4. Elément d'étanchéité (2) selon l'une quelconque des revendications précédentes, dans lequel la tôle métallique contient de l'acier allié résistant aux hautes températures.

5. Elément d'étanchéité (2) selon l'une quelconque des revendications précédentes, dans lequel la zone en forme de gobelet (4) est formée par emboutissage profond de la tôle métallique.

6. Elément d'étanchéité (2) selon l'une quelconque des revendications précédentes, dans lequel la zone en forme de gobelet (4) est formée de telle manière qu'une couche d'air soit formée entre une zone de l'élément d'étanchéité (2) et le tuyau d'échappement.

7. Elément d'étanchéité (2) selon l'une quelconque des revendications précédentes, dans lequel au moins une ouverture (12) destinée à recevoir un élément de fixation est formée dans la zone de fixation plate (9).

8. Elément d'étanchéité (2) selon l'une quelconque des revendications précédentes, dans lequel au moins une face de l'élément d'étanchéité (2) est revêtue au moins en partie avec une masse d'étanchéité, en particulier avec une laque contenant du graphite.

9. Elément d'étanchéité (2) selon la revendication 8, dans lequel le revêtement sur chaque côté de l'élément d'étanchéité (2) a une épaisseur comprise entre 0,005 et 0,015 mm, de préférence de 0,01 mm.
